Europäisches Patentamt

European Patent Office

Office européen des brevets

(11) Veröffentlichungsnummer: **0 247 409 B1**

(19)

(12) **EUROPÄISCHE PATENTSCHRIFT**

(45) Veröffentlichungstag der Patentschrift: **01.07.92**

(21) Anmeldenummer: **87106678.3**

(22) Anmeldetag: **08.05.87**

(51) Int. Cl.5: **H02M 3/335**, H02J 7/10

(54) **Schaltnetzteil mit einem primär getakteten Gleichspannungswandler.**

(30) Priorität: **30.05.86 DE 3618221**

(43) Veröffentlichungstag der Anmeldung:
**02.12.87 Patentblatt 87/49**

(45) Bekanntmachung des Hinweises auf die
Patenterteilung:
**01.07.92 Patentblatt 92/27**

(84) Benannte Vertragsstaaten:
**AT CH DE ES FR GB IT LI NL**

(56) Entgegenhaltungen:
**EP-A- 0 057 910**
**EP-A- 0 130 411**

**Texas Instruments Deutschland: Applikationsbuch Band 2, Seiten 125-135**

(73) Patentinhaber: **Braun Aktiengesellschaft
Rüsselsheimer Strasse 22
W-6000 Frankturt/Main(DE)**

(72) Erfinder: **Schwarz, Gerhard
Eggestrasse 16
W-5990 Altena 1(DE)**

EP 0 247 409 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Schaltnetzteil mit einem primär getakteten Sperrwandler zur geregelten Speisung eines elektrischen Verbrauchers aus einer Eingangsspannungsquelle unterschiedlicher Spannung, bei dem die Primärwicklung eines Übertragers in Reihe zur Hauptstromstrecke eines ersten steuerbaren Halbleiters und einem ersten Widerstand parallel zur Eingangsspannungsquelle geschaltet ist, bei dem eine Sekundärwicklung des Übertragers den Verbraucher speist und eine sekundärseitige Rückkopplung auf die Steuerelektrode des ersten steuerbaren Halbleiters vorgesehen ist und bei dem die Leitfähigkeit eines zweiten steuerbaren Halbleiters, dessen Hauptstromstrecke zwischen der Steuerelektrode des ersten steuerbaren Halbleiters und dem einen Pol der Eingangsspannungsquelle liegt, von zwei Steuersignalen beeinflußbar ist, von denen das erste Steuersignal dem vom Primärstrom am ersten Widerstand hervorgerufenen Spannungsabfall und das zweite, primärseitig gewonnene Steuersignal der Eingangsspannung proportional ist.

Eine solche Schaltungsanordnung ist aus dem "Applikationsbuch Band 2", zweite Auflage, herausgegeben von Texas Instruments Deutschland GmbH, 1978, Seiten 132 bis 135, insbesondere Abbildung 19 und 20 bekannt. Bei dieser Schaltungsanordnung wird das zweite, der Eingangsspannung proportionale Steuersignal aus einem aus zwei Widerständen bestehenden Spannungsteiler (R5/R6 in Abb. 19), der zwischen den beiden Polen der Eingangsspannungsquelle liegt, gewonnen und der Steuerelektrode eines Thyristors als zweitem steuerbaren Halbleiter zugeführt. Über einen weiteren Widerstand wird das erste, dem Primärstrom proportionale Steuersignal ebenfalls an die Steuerelektrode des Thyristors geführt.

Da der rein ohmsche Spannungsteiler über der Eingangsspannung liegt und je nach der Eingangsimpedanz des zweiten steuerbaren Halbleiters und der Impedanz der Zuführung des ersten Steuersignals vergleichsweise niederohmig sein muß, ergibt sich vor allem bei hohen Eingangsspannungen eine verhältnismäßig große Verlustleistung. Die sekundärseitige Rückkopplung auf die Steuerelektrode des ersten steuerbaren Halbleiters erfolgt hier über eine zweite Sekundärwicklung (N1).

Aus der EP 0 057 910 A2 ist eine Schaltung zur geregelten Spannungs- und Stromversorgung eines Verbrauchers bei variablen Eingangsspannungen bekannt, die einen Sperrwandler mit einem Übertrager aufweist, dessen Primärwicklung in Reihe zur Hauptstromstrecke eines ersten steuerbaren Halbleiters, einem Widerstand und einer einen Verbraucher speisenden Batterie geschaltet ist. Die Steuerelektrode des ersten steuerbaren Halbleiters ist an eine konstante, wahlweise veränderbare Spannungsquelle angeschlossen, die aus einem zweiten steuerbaren Halbleiter und einer zwischen der Steuerelektrode des ersten steuerbaren Halbleiters und der Steuerelektrode des zweiten steuerbaren Halbleiters angeordneten, als Referenzspannungsquelle dienenden Zenerdiode besteht.

Ein den Hauptstrom führender Anschluß des ersten steuerbaren Halbleiters ist an eine Teilspannung der Sekundärwicklung des Übertragers gelegt. Die Leitfähigkeit des zweiten steuerbaren Halbleiters, dessen Hauptstromstrecke zwischen der Steuerelektrode des ersten steuerbaren Halbleiters und dem einen Pol der Eingangsspannungsquelle liegt, wird von der an der Zenerdiode abfallenden Spannung beeinflußt und bestimmt in Verbindung mit dem in der Hauptstromstrecke liegenden Widerstand und der Batteriespannung das Schaltverhalten des ersten steuerbaren Halbleiters.

Der Erfindung liegt die Aufgabe zugrunde, die Verlustleistung eines Schaltnetzteiles der eingangs genannten Art zu verringern.

Diese Aufgabe wird dadurch gelöst, daß zwischen dem anderen Pol der Eingangsspannungsquelle und dem Verbindungspunkt des ersten Widerstands mit einer Hauptelektrode des ersten steuerbaren Halbleiters die Reihenschaltung eines dritten Widerstandes mit der Parallelschaltung eines Kondensators und eines zweiten Widerstandes angeordnet ist, wobei am Verbindungspunkt zwischen dem dritten Widerstand und der Parallelschaltung aus Kondensator und zweitem Widerstand die die Leitfähigkeit des zweiten steuerbaren Halbleiters beeinflussende Summe der beiden Steuersignale anliegt.

Diese Lösung ermöglicht ein verlustarmes Konstanthalten des Ausgangsstroms über einen großen Eingangsspannungsbereich von etwa 1:3, also beispielsweise von 100 Volt bis 300 Volt.

Bei geeigneter Dimensionierung der erfindungsgemäßen Schaltungsanordnung, bei der das zweite Steuersignal, das der Eingangsspannung proportional ist, direkt aus dem Primärkreis der Wandleranordnung gewonnen wird, ist die Verlustleistung geringer als bei solchen Schaltungsanordnungen, bei denen dieses Steuersignal aus der vollen Sekundärwicklung der Wandleranordnung gewonnen wird.

In einer vorteilhaften Ausgestaltung ist der zweite steuerbare Halbleiter ein Transistor. In dem eingangs angeführten Applikationsbuch von Texas Instruments ist der zweite steuerbare Halbleiter ein Thyristor, weil dieser weniger Steuerstrom benötigt als ein Transistor und damit der Spannungsteiler nicht zu niederohmig (mit noch größerer Verlustleistung) gemacht werden muß. Die erfindungsgemäße Lösung gestattet es aber, trotz ihrer gleichstrommäßigen Hochohmigkeit einen Transistor zu verwenden, da hier das der Eingangsspannung proportionale Steuersignal an einem Kondensator gebildet wird, der für die Durchschaltung des zweiten steuerbaren Halbleiters eine niederohmige Spannungsquelle darstellt. Bei der genannten Veröffentlichung werden die beiden Steuersignale der Steuerelektrode des Thyristors parallel über Widerstände zugeführt, weshalb diese Widerstände einander angepaßt und relativ niederohmig sein müssen.

Weitere vorteilhafte Ausgestaltungen sind in den übrigen Unteransprüchen angegeben.

Im folgenden wird an Hand der Zeichnungen ein Ausführungsbeispiel näher erläutert. Es zeigen:

Fig. 1 das Ausführungsbeispiel mit einem Motor und einem Akkumulator als Verbraucher, bei dem der Primärstrom nicht über den Verbraucher fließt,

Fig. 2 das Ausführungsbeispiel mit einem Motor und einem Akkumulator als Verbraucher, bei dem auch der Primärstrom über den Verbraucher fließt und

Fig. 3 den Kurvenverlauf der Spannung am Kondensator (Punkt A in Fig. 2) bei unterschiedlichen Eingangsspannungen.

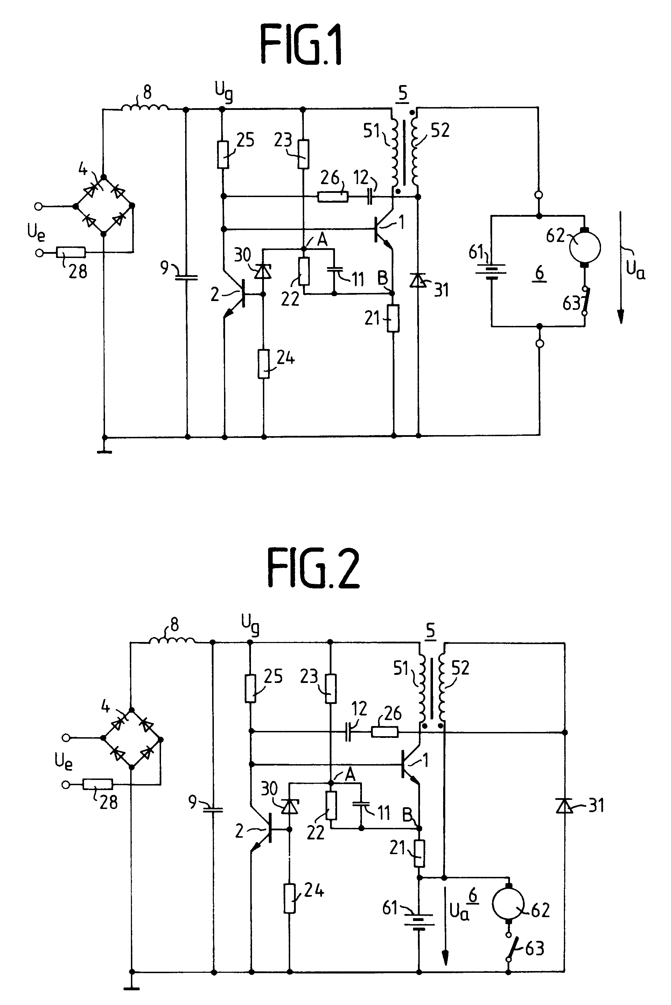

Das in Fig. 1 dargestellte Schaltnetzteil weist einen primär getakteten Sperrwandler mit einem Übertrager 5 und einem ersten Transistor 1 sowie einer im Lastkreis vorgesehenen Diode 31 auf, die so gepolt ist, daß die in der Sperrzeit des ersten Transistors im Übertrager 5 gespeicherte Energie in den Verbraucher 6, der hier aus einem Akkumulator 61 und aus einem über einen Schalter 63 an den Akkumulator 61 schaltbaren Gleichstrommotor 62 besteht, entladen wird. Ist der Verbraucher nur ein Gleichstrommotor ohne einen Akkumulator, muß dem Motor zur Glättung der Ausgangsspannung ein Kondensator parallel geschaltet werden. Der Sperrwandler wird über eine Gleichrichter-Brückenschaltung 4 und einen Widerstand 28 aus einem Gleich- oder Wechselspannungsnetz gespeist, dessen Spannung zwischen 100 und 250 Volt, im Extremfall aber auch 12 Volt, und dessen Frequenz im Falle eines speisenden Wechselspannungsnetzes nahezu beliebig sein kann, variieren kann. Die gleichgerichtete Ausgangsspannung wird über eine Längsdrossel 8 und einen Querkondensator 9 an den Eingang des Sperrwandlers bzw. der Steuer- und Regelelektronik gelegt.

Die gleichgerichtete Spannung $U_g$ liegt an der Reihenschaltung der Primärwicklung 51 des Übertragers 5, der Kollektor-Emitter-Strecke des ersten Transistors 1 und dem ersten Widerstand 21. Die Basis des ersten Transistors 1 ist sowohl über die Reihenschaltung eines Widerstandes 26 und eines Kondensators 12 mit dem einen Anschluß der Sekundärwicklung 52 des Übertragers 5 als auch über einen Widerstand 25 mit dem positiven Potential der gleichgerichteten Spannung $U_g$ verbunden. Darüberhinaus ist die Basis des ersten Transistors 1 über die Kollektor-Emitter-Strecke eines zweiten Transistors 2 mit Masse- oder Bezugspotential verbunden.

Der Emitter des ersten Transistors ist über den ersten Widerstand 21 mit Masse- oder Bezugspotential verbunden. Die mit B bezeichnete Verbindung zwischen dem Emitter des ersten Transistors 1 und des ersten Widerstands 21 liegt über die Parallelschaltung eines Kondensators 11 mit einem zweiten Widerstand 22 und über einen weiteren Widerstand 23 am positiven Pol der Eingangsspannungsquelle. Der Verbindungspunkt des Widerstands 23 mit der Parallelschaltung aus Kondensator 11 und Widerstand 22 ist mit A bezeichnet und liegt über eine Zenerdiode 30 an der Basis des zweiten Transistors 2. Über einen Widerstand 24 ist die Basis des Transistors 2 mit Bezugspotential verbunden. Die Zenerdiode 30 erlaubt eine definiertere Festlegung der Schaltschwelle des Transistors 2. Wird die Zenerdiode 30 hier in Fig. 1 weggelassen, das heißt die Basis des Transistors 2 direkt mit dem Punkt A verbunden, entfällt der Widerstand 24. Der Wert des Widerstands 21 wird dann, bei sonst gleicher Dimensionierung, entsprechend kleiner.

Der Wickelsinn der Primär- und Sekundärwicklung 51 bzw. 52 des Übertragers 5 ist durch die eingetragenen Punkte bestimmt.

Die Schaltung kann entsprechend Figur 2 auch so aufgebaut werden, daß der Akkumulator zusätzlich zu dem durch die Sekundärwicklung fließenden Sekundärstrom auch noch von dem durch die Primärwicklung fließenden Primärstrom durchflossen wird. Wie aus Figur 2 ersichtlich, ist der Akkumulator 61 zwischen den Widerstand 21 und Bezugspotential geschaltet und das eine Ende der Sekundärwicklung 52 an den Verbindungspunkt zwischen Akkumulator 61 und Widerstand 21 geführt.

Nachstehend soll die Funktionsweise des elektronischen Schaltnetzteiles, die in Figur 1 und 2 die gleiche ist, an Hand von Figur 2 näher erläutert werden.

Nach der Gleichrichtung der am Eingang der Gleichrichter-Brückenschaltung 4 anliegenden Gleich- oder Wechselspannung $U_e$ wird der als Schalttransistor arbeitende erste Transistor 1 über den Widerstand 25 mit einem geringen Basisstrom angesteuert, in Folge dessen der erste Transistor 1 in den leitenden Zustand gesteuert wird. Über den Widerstand 26 und den Kondensator 12 entsteht über die Sekundärwicklung 52 des Übertragers 5 ein Mitkopplungseffekt, durch den der erste Transistor 1 zusätzlich angesteuert und schlagartig in den vollständig leitenden Zustand geschaltet wird. Der Kollektorstrom steigt linear an und erzeugt am ersten Widerstand 21 einen dem jeweiligen Kollektorstrom proportionalen Spannungsabfall. Die am Punkt B gegen Bezugspotential anliegende Spannung $U_B$ entspricht dann in Figur 2 dem Spannungsabfall am Widerstand 21 plus der Akkumulatorspannung $U_a$, die hier die Ausgangsspannung darstellt. Zu dieser dem Emitterstrom durch den Transistor 1 proportionalen Spannung $U_B$ addiert sich die am Kondensator 11 stehende Spannung, die der Eingangsspannung $U_g$ proportional ist. Die am Punkt A gegen Bezugspotential anliegende Spannung $U_A$ entspricht also einer der Eingangsspannung $U_e$ bzw. der Gleichspannung $U_g$ proportionalen Spannung plus der Spannung $U_B$. Diese Addition erfolgt in Form einer Reihenschaltung zweier niederohmiger Spannungsquellen. Beim Erreichen einer bestimmten Spitzenspannung $U_A$ wird über die Zenerdiode 30 der zweite Transistor 2 angesteuert, gelangt dadurch in den leitenden Zustand und verbindet die Basis des ersten Transistors 1 mit Masse- bzw. Bezugspotential und entzieht damit dem ersten Transistor 1 den Basisstrom, woraufhin der erste Transistor 1 sperrt.

Mit Beginn der Sperrphase des ersten Transistors 1 wechselt die Polarität der in der Sekundärwicklung 52 des Übertragers 5 induzierten Spannung. Die im Übertrager 5 gespeicherte Energie wird damit nach dem Prinzip des Sperrwandlers über die Diode 31 an den Akkumulator 61 abgegeben.

Der Widerstand 23 kann sehr hochohmig ausgeführt werden, womit eine geringe Verlustleistung erreicht wird, da nur der geringe Ladungsverlust des Kondensators 11 durch die Ansteuerung des Transistors 2 in seiner relativ langen Sperrphase nachgeladen werden muß. Da der Kondensator 11 für dynamische Vorgänge niederohmig ist, erhält der Transistor 2 seinen Steuerstrom aus der Reihenschaltung zweier niederohmigen Spannungsquellen.

Für die Anordnung in Fig. 2 kann bei einer Akkumulatorspannung von $U_a = 2{,}6$ Volt folgende Dimensionierung gewählt werden:
Widerstand 21 = 18 Ohm
Widerstand 22 = 5,6 kOhm
Widerstand 23 = 560 kOhm
Widerstand 24 = 330 Ohm
Kondensator 11 = 33 nF
Durchbruchspannung der Zenerdiode 30 = 5,1 Volt.

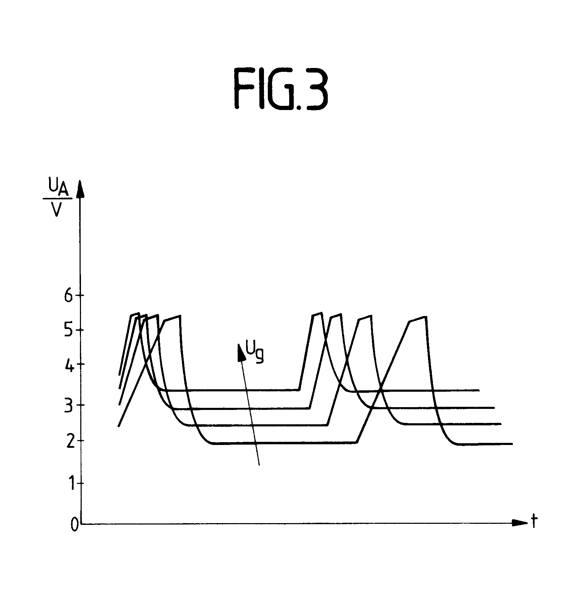

Für eine solche Dimensionierung ist der Spannungsverlauf $U_A$ am Punkt A (Fig. 2) für gleichgerichtete Eingangsspannungen $U_g$ von 100 Volt, 150 Volt, 200 Volt und 250 Volt in Fig. 3 dargestellt. Wie hieraus ersichtlich ist, schaltet der Transistor 2 immer bei der gleichen Spannung $U_A$ (ca. 5,2 Volt) durch und sperrt damit den Transistor 1, unabhängig von der Größe der anliegenden Eingangsspannung $U_g$. Dabei beeinflußt das zweite Steuersignal sowohl die Dauer als auch die Stromamplitude des Leitzustandes des Transistors 1. Die gezeigten Kurven stellen hier die Summe der beiden Steuersignalspannungen plus der am Akkumulator anliegenden Spannung $U_a$ dar. In den Zeiten, wo beide Transistoren 1 und 2 vollkommen gesperrt sind, verlaufen die Kurven horizontal. Zu diesen Zeiten ist der Strom durch den Widerstand 21, d.h. der Primärstrom, null. Am Punkt B liegt dann die Akkumulatorspannung $U_a$ und am Punkt A die Spannung $U_x$ plus der Spannung des zweiten Steuersignals, das von der Größe der Eingangsspannung abhängig ist.

Beginnt der Transistor 1 zu leiten, steigt die Spannung $U_A$ infolge des Spannungsabfalls am Widerstand 21 steil an, bis die Schaltspannung für den Transistor 2 erreicht ist. Das Durchschalten des Transistors 2 bewirkt das Sperren des Transistors 1.

## Patentansprüche

1. Schaltnetzteil mit einem primär getakteten Sperrwandler zur geregelten Speisung eines elektrischen Verbrauchers (6, 61) aus einer Eingangsspannungsquelle unterschiedlicher Spannung,

bei dem die Primärwicklung (51) eines Übertragers (5) in Reihe zur Hauptstromstrecke eines ersten steuerbaren Halbleiters (1) und einem ersten Widerstand (21) parallel zur Eingangsspannungsquelle geschaltet ist,

bei dem eine Sekundärwicklung (52) des Übertragers (5) den Verbraucher speist und eine sekundärseitige Rückkopplung auf die Steuerelektrode des ersten steuerbaren Halbleiters (1) vorgesehen ist und

bei dem die Leitfähigkeit eines zweiten steuerbaren Halbleiters (2), dessen Hauptstromstrecke zwischen der Steuerelektrode des ersten steuerbaren Halbleiters (1) und dem einen Pol der Eingangsspannungsquelle liegt, von zwei Steuersignalen beeinflußbar ist, von denen das erste Steuersignal dem vom Primärstrom am ersten Widerstand (21) hervorgerufenen Spannungsabfall und das zweite, primärseitig gewonnene Steuersignal der Eingangsspannung proportional ist,

**dadurch gekennzeichnet,**

daß zwischen dem anderen Pol der Eingangsspannungsquelle und dem Verbindungspunkt (B) des ersten Widerstands (21) mit einer Hauptelektrode des ersten steuerbaren Halbleiters (1) die Reihenschaltung eines dritten Widerstandes (23) mit der Parallelschaltung eines Kondensators (11) und eines zweiten Widerstandes (22) angeordnet ist, wobei am Verbindungspunkt (A) zwischen dem dritten Widerstand (23) und der Parallelschaltung aus Kondensator (11) und zweitem Widerstand (22) die die Leitfähigkeit des zweiten steuerbaren Halbleiters (2) beeinflussende Summe der beiden Steuersignale anliegt.

2. Schaltnetzteil nach Anspruch 1, **dadurch gekennzeichnet,** daß der zweite steuerbare Halbleiter (2) ein Transistor ist.

3. Schaltnetzteil nach Anspruch 1, **dadurch gekennzeichnet,** daß die an dem Verbindungspunkt (A) anliegende Summe der beiden Steuersignale über eine Zenerdiode (30) an der Steuerelektrode des zweiten steuerbaren Halbleiters (2) liegt.

4. Schaltnetzteil nach Anspruch 1, **dadurch gekennzeichnet,** daß der Verbraucher (6) aus einem Akkumulator (61) und einem dazu parallel schaltbaren Gleichstrommotor (62) besteht, wobei der Verbraucher (6) über eine Diode (31) an die Sekundärwicklung (52) angeschlossen ist (Fig. 1).

5. Schaltnetzteil nach Anspruch 1 und 3, **dadurch gekennzeichnet,** daß der aus einem Akkumulator (61) und einem dazu parallel schaltbaren Gleichstrommotor (62) bestehende Verbraucher sowohl von dem durch die Sekundärwicklung (52) fließenden Strom als auch von dem durch die Primärwicklung (51) fließenden Primärstrom gespeist wird (Fig. 2).

## Claims

1. A switching power supply with a primary switched mode blocking oscillator type converter for supplying regulated power to an electrical load (6, 61) from an input voltage source of different voltage levels,

   wherein the primary coil (51) of a transformer (5) is connected in series with the main circuit of a first controllable semiconductor (1) and a first resistor (21) in parallel arrangement with said input voltage source,

   wherein a secondary coil (52) of said transformer (5) supplies electrical power to said load and a secondary feedback is provided to the control electrode of said first controllable semiconductor (1), and

   wherein the conductivity of a second controllable semiconductor (2) which has its main circuit between the control electrode of said first controllable semiconductor (1) and the one terminal of said input voltage source, is adapted to be operated on by two control signals, the first control signal being proportional to the voltage drop across said first resistor (21) caused by the primary current, and the second control signal obtained on the primary side being proportional to the input voltage,

   **characterized in that** a series arrangement comprising a third resistor (23) and a capacitor (11) connected in parallel with a second resistor (22) is provided between the other terminal of said input voltage source and the junction (B) of said first resistor (21) and a main electrode of said first controllable semiconductor (1), wherein the sum of said two control signals which operates on the conductivity of said second controllable semiconductor (2) is applied to the junction (A) of said third resistor (23) and the parallel arrangement comprised of said capacitor (11) and said second resistor (22).

2. The switching power supply as claimed in claim 1, **characterized in that** said second controllable semiconductor (2) is a transistor.

3. The switching power supply as claimed in claim 1, **characterized in that** the sum of said two control signals present at said junction (A) is applied to the control electrode of said second controllable semiconductor (2) via a zener diode (30).

4. The switching power supply as claimed in claim 1, **characterized in that** said load (6) is comprised of an accumulator (61) and a direct-current motor (62) adapted to be connected in parallel therewith, said load (6) being connected to said secondary coil (52) through a diode (31) (FIG. 1).

5. The switching power supply as claimed in claim 1 and claim 3, **characterized in that** said load comprised of an accumulator (61) and a direct-current motor (62) adapted to be connected in parallel therewith is powered from both the current flowing through said secondary coil (52) and the primary current flowing through said primary coil (51) (FIG. 2).

## Revendications

1. Module d'alimentation avec convertisseur à oscillateur bloqué côté primaire, pour l'alimentation régulée d'un organe consommateur électrique (6, 61) à partir d'une source d'entrée de valeur différente,

dans lequel un groupement série, comportant l'enroulement primaire (51) d'un transformateur (5), le trajet de courant principal d'un premier semiconducteur pouvant être commandé (1) et une première résistance (21) montés en série, est relié en parallèle à la source de tension d'entrée;

dans lequel un enroulement secondaire (52) du transformateur (5) alimente l'organe consommateur et il est prévu, côté secondaire, un rétrocouplage à l'électrode de commande du premier semiconducteur pouvant être commandé (1); et

dans lequel la conductibilité d'un deuxième semiconducteur pouvant être commandé (2), dont le trajet de courant principal se trouve entre l'électrode de commande du premier semiconducteur pouvant être commandé (1) et le premier pôle de la source de tension d'entrée, peut être influencée par deux signaux de commande, le premier signal de commande étant proportionnel à la chute de tension que le courant primaire provoque dans la première résistance (21), et le deuxième signal de commande, obtenu côté primaire, étant proportionnel à la tension d'entrée,

caractérisé

par le fait qu'un groupement série comportant une troisième résistance (23) montée en série avec un groupement parallèle constitué d'un condensateur (11) relié en parallèle à une deuxième résistance (22), est agencé entre l'autre pôle de la source de tension d'entrée et le point de connexion (B) de la première résistance (21) à une électrode principale du premier semiconducteur pouvant être commandé (1), la somme des deux signaux de commande, cette somme influençant la conductibilité du deuxième semiconducteur pouvant être commandé (2), étant présente au point de connexion (A) entre la troisième résistance (23) et le groupement parallèle constitué du condensateur (11) et de la deuxième résistance (22).

2. Module d'alimentation selon revendication 1, caractérisé par le fait que le deuxième semiconducteur pouvant être commandé (2) est un transistor.

3. Module d'alimentation selon revendication 1, caractérisé par le fait que la somme des deux signaux de commande, présente au point de connexion (A), est appliquée, par l'intermédiaire d'une diode zener (30) à l'électrode de commande du deuxième semiconducteur pouvant être commandé (2).

4. Module d'alimentation selon revendication 1, caractérisé par le fait que l'organe consommateur (6) est constitué par un accumulateur (61) et par un moteur à courant continu (62) pouvant être relié en prallèle à celui-ci, l'organe consommateur (6) étant raccordé à l'enroulement secondaire (52) par l'intermédiaire d'une diode (31) (figure 1).

5. Module d'alimentation selon revendications 1 et 3, caractérisé par le fait que l'organe consommateur, constitué par un accumulateur (61) et par un moteur à courant continu (62) qui peut être branché en parallèle de celui-ci, est alimenté à la fois par le courant passant dans l'enroulement secondaire (52) et par le courant primaire passant dans l'enroulement primaire (51) (figure 2).

# FIG.1

# FIG.2

7

# FIG.3